# FASCICULE DE BREVET EUROPEEN

(11) **EP 1 241 385 B1**
(45) Date de publication et mention de la délivrance du brevet: **08.03.2006**
(21) Numéro de dépôt: 02290639.0
(22) Date de dépôt: 13.03.2002
(51) Int. Cl.: F16K 11/074, F16K 11/20, F16K 3/08

(54) **Cartouche thermostatique quart de tour à commandes concentriques, à disques en céramique, et robinet mélangeur muni d'une telle cartouche**
Vierteldrehungsthermostatischekartusche mit konzentrischem Antrieb, mit keramischen Scheiben, und eine Mischbatterie die diese enthält
Quarter-turn thermostatic cartridge with concentric motion, with ceramic discs, and mixing tap using such a cartridge

(30) Priorité: 15.03.2001 FR 0103557
(43) Date de publication de la demande: 18.09.2002
(73) Titulaire: VERNET S.A., 91291 Arpajon Cédex (FR)
(72) Inventeur: Mace, Christian, 91810 Vert le Grand (FR); Chamot, Jean, 91290 Arpajon (FR)
(74) Mandataire: Jacobson, Claude

(56) Documents cités:
- EP-A- 0 390 121
- EP-A- 0 886 013
- EP-A- 1 022 635
- FR-A- 2 470 317
- US-A- 4 610 393
- US-A- 6 089 462

## Description

L'invention concerne une cartouche thermostatique quart de tour à commandes concentriques, à disques en céramique, ainsi qu'un robinet mélangeur comportant une telle cartouche.

Le document EP-A-1 022 635 décrit une cartouche conforme au préambule de la revendication 1.

La plupart des robinets à cartouche à disques céramiques du type quart de tour équipant actuellement les éviers ou les lavabos, ne permettent pas de stabiliser efficacement la température du fluide de sortie, dit fluide « mélangé » ou « mitigé », quand la pression ou/et la température de l'un au moins des fluides d'entrée (dits « fluide froid » et « fluide chaud » ) varie.

On a donc créé des cartouches de ce type équipées d'un élément thermostatique pour réguler la température du fluide de sortie.

On connaît en particulier des cartouches thermostatiques de ce type à monocommande, permettant de constituer des robinets « mitigeurs », c'est à dire au moyen desquels les réglages du débit et de la température sont effectués en actionnant un levier unique. Ces cartouches assurent le réglage du débit au moyen de deux disques en céramique superposés, le disque inférieur comportant des canaux de montée et de descente du fluide froid et du fluide chaud d'entrée, et la régulation de la température du fluide mitigé de sortie au moyen d'un tiroir de régulation de température situé en aval, au-dessous du disque inférieur, solidarisé à un élément thermostatique de commande.

On connaît également des cartouches thermostatiques de ce type à commandes concentriques, nécessitant un robinet comportant deux manettes concentriques pour les commandes du débit et de la température. Le réglage du débit est également assuré par deux disques en céramique, et le réglage de la température par un tiroir de régulation de température solidarisé à un élément thermostatique, mais les deux disques comportent des canaux de montée de fluide froid et de fluide chaud, et le tiroir, situé en aval de ces canaux, est cette fois disposé au-dessus du disque supérieur.

Dans les deux cas, l'agencement de la cartouche limite le diamètre disponible pour le tiroir de régulation de température et la section de passage du fluide, et il en résulte une mauvaise régulation en température, incompatible avec les normes en vigueur pour les robinets thermostatiques, et un faible débit, ce qui limite la gamme des applications possibles.

L'invention a pour but de remédier à ces inconvénients et concerne à cette fin une cartouche thermostatique à disques en céramique pour robinet de fluide, du type quart de tour à commandes concentriques, comportant un tiroir de régulation solidarisé à une partie mobile d'un élément thermostatique, et un premier et un deuxième disques de réglage de débit accolés par l'une de leurs faces, caractérisée en ce que le premier disque comporte deux passages internes traversants de fluide chaud s'étendant approximativement en arcs de circonférences de rayons approximativement égaux, séparés et approximativement bout à bout, deux passages internes traversants de fluide froid s'étendant approximativement en arcs de circonférences de rayons approximativement égaux, séparés et approximativement bout à bout, et un évidement interne débouchant dans la face du disque qui n'est pas accolée au deuxième disque et dont le fond constitue un siège pour le tiroir et est en communication avec l'un des passages de fluide froid, et le deuxième disque comporte deux passages internes respectivement de fluide chaud et de fluide froid s'étendant approximativement en arcs de circonférences et est mobile en rotation par rapport au premier disque depuis une position d'ouverture où le passage de fluide chaud du deuxième disque relie les passages de fluide chaud du premier disque, et le passage de fluide froid du deuxième disque relie les passages de fluide froid du premier disque, à une position de fermeture où le passage de fluide chaud du deuxième disque est isolé d'au moins l'un des passages de fluide chaud du premier disque et le passage de fluide froid du deuxième disque est isolé d'au moins l'un des passages de fluide froid du premier disque, et inversement.

Grâce à cet agencement, on obtient une régulation de température efficace dans une large plage de débits, et notamment pour des débits très intenses.

La cartouche peut en outre présenter une ou plusieurs des caractéristiques additionnelles suivantes :
- les passages respectivement de fluide chaud et de fluide froid du deuxième disque sont des passages traversants, et elle comporte une manette de commande de débit munie de deux chambres respectivement de fluide chaud et de fluide froid en regard respectivement des passages de fluide chaud et de fluide froid du deuxième disque ; ainsi, les sections d'écoulement de fluide chaud et de fluide froid entre les passages de fluide chaud et entre les passages de fluide froid respectivement peuvent être importantes tout en ne nécessitant pas une grande épaisseur pour le deuxième disque ;
- les passages respectivement de fluide chaud et de fluide froid du deuxième disque ne traversent pas ce disque d'une face à l'autre ; dans ce cas, la fabrication de ce deuxième disque et de sa manette de commande est simplifiée, et il en est de même du montage de la cartouche.
- elle comporte un espace annulaire pour le fluide chaud s'étendant autour du tiroir et défini par des surfaces extérieures de celui-ci et des surfaces intérieures d'un organe comportant un siège pour celui-ci et/ou d'un boîtier dans lequel sont logés le tiroir et les disques ; ainsi, on obtient une bonne répartition du fluide chaud autour du tiroir, ce qui contribue à la stabilisation de la régulation ;
- elle comporte un espace annulaire pour le fluide froid s'étendant autour du tiroir et défini par des surfaces extérieures de celui-ci et des surfaces intérieures d'un organe comportant un siège pour celui-ci ; ainsi, on obtient une bonne répartition du fluide froid autour du tiroir, ce qui contribue également à la stabilisation de la régulation ;
- elle comporte un boîtier présentant en une seule pièce un conduit d'entrée de fluide chaud et un conduit d'entrée de fluide froid communiquant respectivement avec un passage de fluide chaud et un passage de fluide froid du premier disque lequel est lié en rotation audit boîtier, un conduit de retour de fluide chaud dans lequel débouche un passage de retour de fluide chaud du premier disque, une surface formant siège pour le tiroir et délimitant avec celui-ci un passage pour le fluide chaud provenant du premier disque par le conduit de retour de fluide chaud pour le canaliser vers l'intérieur du tiroir, et une surface intérieure de guidage du tiroir, et le boîtier contient notamment les deux disques ainsi, que le tiroir de régulation et l'élément thermostatique, maintenus par un bouchon de boîtier; ainsi, les coûts de fabrication de la cartouche restent relativement peu élevés ; et
- elle comporte un organe de création de turbulences présentant une surface intérieure de forme irrégulière en vis-à-vis d'une région thermosensible d'un élément thermostatique ; ainsi, la régulation thermostatique est améliorée.

L'invention concerne également un robinet mélangeur muni d'une cartouche telle que définie ci-dessus, caractérisé en ce qu'il comporte un organe de commande de débit solidarisé à une manette de commande de débit de la cartouche, et un organe de commande de température solidarisé à une manette de commande de température de la cartouche.

D'autres caractéristiques et avantages de l'invention ressortiront de la description qui va suivre, de formes de réalisation de l'invention données à titre d'exemples non limitatifs, illustrée par les dessins joints dans lesquels :
- la figure 1 est une coupe longitudinale schématique d'une cartouche thermostatique selon l'invention,
- la figure 2 est une coupe longitudinale schématique de la cartouche de la figure 1, selon un plan de coupe perpendiculaire à celui de cette figure,

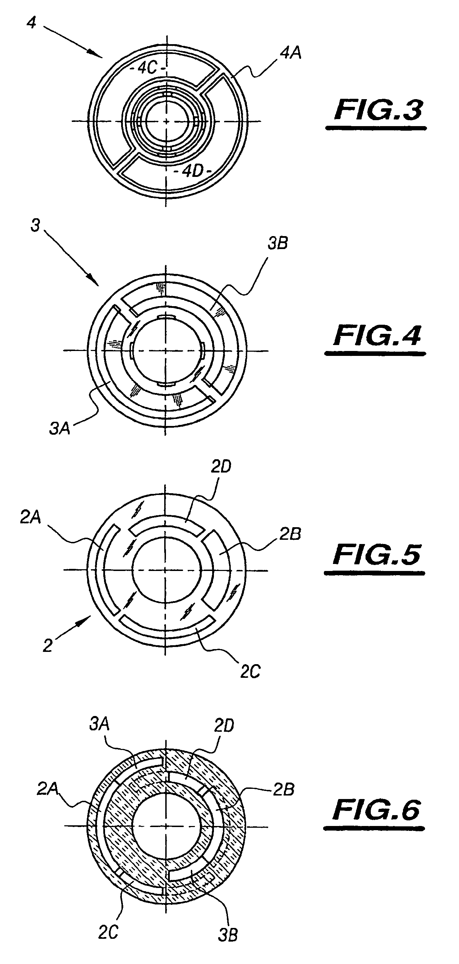

- la figure 3 est une vue de dessous d'une manette de commande de débit équipant la cartouche des figures 1 et 2,
- la figure 4 est une vue de dessus d'un disque supérieur équipant la cartouche des figures 1 et 2,
- la figure 5 est une vue de dessus d'un disque inférieur équipant la cartouche des figures 1 et 2,
- la figure 6 est une vue en coupe par un plan transversal à la cartouche passant par la ligne VI-VI de la figure 1, du montage du disque supérieur de la figure 4 sur le disque inférieur de la figure 5, et
- la figure 7 est une coupe longitudinale schématique similaire à celle de la figure 1, d'une deuxième forme de réalisation d'une cartouche selon l'invention.

La cartouche représentée sur les dessins, agencée autour et le long d'un axe central A, est destinée à équiper un robinet mélangeur d'eau.

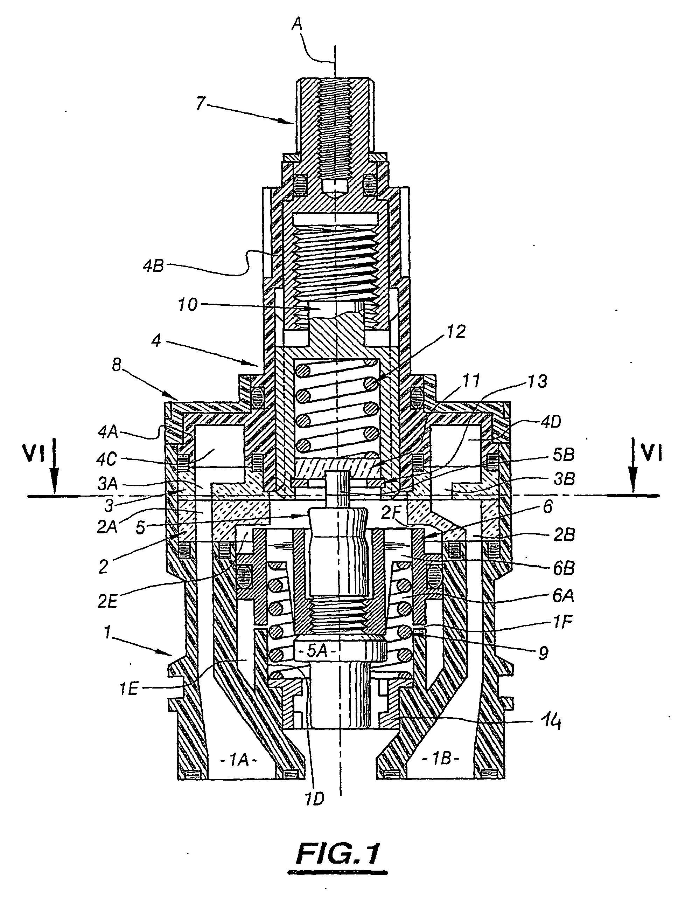

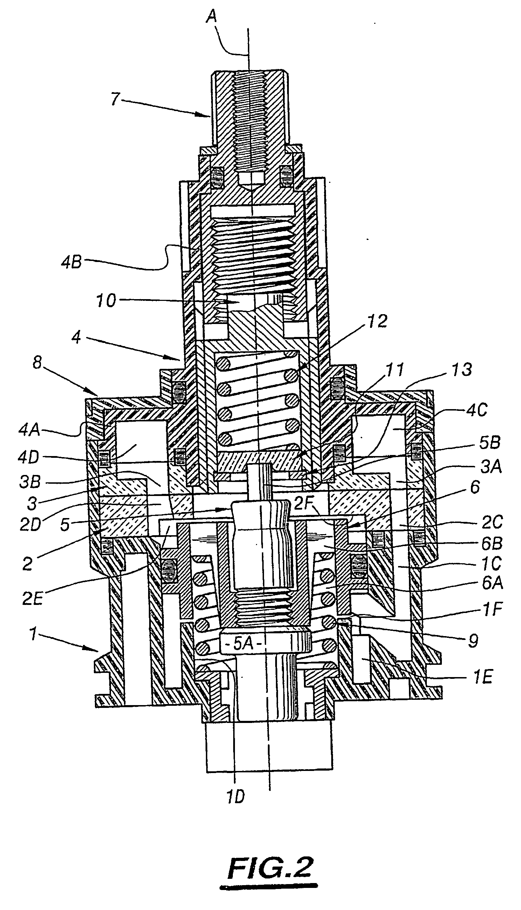

Elle comporte un boîtier 1 présentant dans sa base (sa partie inférieure sur les figures 1 et 2), s'étendant longitudinalement, un conduit traversant excentré d'entrée d'eau chaude 1A, un conduit traversant excentré d'entrée d'eau froide 1B, un conduit excentré de retour d'eau chaude 1C, et un canal central (axial) traversant se terminant dans la région de l'extrémité inférieure de la base du boîtier, par un conduit de sortie d'eau mélangée 1D ; le boîtier 1 présente dans sa partie supérieure extérieurement de forme générale cylindrique, un logement également de forme générale cylindrique dans lequel sont logés notamment un disque inférieur 2, un disque supérieur 3 dont la face inférieure est accolée à la face supérieure du disque inférieur 2, et la partie inférieure 4A d'une manette de commande de débit 4 adaptée pour être solidarisée à un organe de commande de débit d'un robinet mélangeur. La partie inférieure 4A de la manette comporte une bride extérieure dont la base est enfilée dans la partie supérieure du boîtier 1 et est en appui sur le disque supérieur 3, et un manchon intérieur en saillie au-delà de la bride et qui est enfilé dans la partie supérieure d'un trou central (axial) traversant du disque supérieur 3 lequel est lié en rotation à la manette ; la partie inférieure 4A renferme par ailleurs un dispositif de butée de surcourse qui sera décrit plus loin, pour un équipage mobile comprenant un élément thermostatique 5 à cire dilatable comportant une partie mobile 5A dont une région est thermosensible, à laquelle est solidarisée, par exemple vissé, un tiroir de régulation 6, lequel équipage mobile est logé essentiellement dans les trous axiaux du boîtier et des disques comme on le verra dans la suite ; dans la partie supérieure 4B de la manette 4, est logée la base d'une manette de commande de température 7 à laquelle l'équipage mobile est lié par un système vis-écrou et qui est adaptée pour être solidarisée à un organe de commande de température du robinet.

Plus précisément, dans la base du boîtier 1, le canal central se terminant par le conduit de sortie d'eau mélangée 1D comporte, dans sa région supérieure, une chambre de plus grand diamètre que ce conduit, dans laquelle le tiroir 6 est monté coulissant ; cette chambre se prolonge autour du conduit 1D par une gorge annulaire 1E délimitée intérieurement et séparée du conduit par une cloison interne annulaire dont un chant d'extrémité 1F constitue un siège pour le tiroir 6 ; dans la gorge annulaire, débouche le conduit de retour d'eau chaude 1C qui est ainsi en communication avec la chambre du canal central et avec le conduit de sortie d'eau mélangée 1D quand le tiroir n'est pas en appui sur son siège 1F ; on notera que le conduit de retour d'eau chaude 1C ne débouche pas dans la face inférieure de la base du boîtier, mais débouche seulement dans sa face supérieure, et comme on vient de le voir dans la gorge 1E.

Le disque inférieur 2, lié en rotation au boîtier 1, comporte un trou central axial traversant le disque d'une face à l'autre et de plus, d'une part en regard du conduit d'entrée d'eau chaude 1A, un premier passage interne d'eau chaude 2A également traversant et s'étendant dans le disque en arc de circonférence centré sur l'axe central A et inférieur à 90°, et d'autre part en regard du conduit d'entrée d'eau froide 1B un premier passage interne d'eau froide 2B traversant s'étendant également en arc de circonférence centré sur l'axe central et inférieur à 90°, diamétralement opposé au premier passage d'eau chaude 2A ; le disque inférieur 2 comporte en outre d'une part un deuxième passage interne d'eau chaude 2C traversant le disque d'une face à l'autre, s'étendant dans celui-ci en arc de circonférence centré sur l'axe central et inférieur à 90°, dans lequel ne débouche pas le conduit d'entrée d'eau chaude 1A mais qui débouche lui-même dans le conduit de retour d'eau chaude 1C, et d'autre part un deuxième passage interne d'eau froide 2D traversant, s'étendant en arc de circonférence centré sur l'axe central et inférieur à 90°, dans lequel ne débouche pas le conduit d'entrée d'eau froide 1B mais qui débouche lui-même dans un évidemment 2E du disque s'étendant annulairement autour du trou central et débouchant dans la face du disque qui est accolée à la face supérieure de la base du boîtier 1, donc dans la chambre du canal central de cette base ; le fond annulaire 2F de l'évidemment 2E, en vis-à-vis du siège 1F du boîtier 1 pour une face inférieure du tiroir 6, constitue lui-même un siège pour la face opposée, supérieure, du tiroir. Les rayons des arcs de circonférences des deux passages traversants d'eau chaude 2A, 2C sont approximativement égaux, et ces deux passages sont disposés approximativement bout à bout à faible distance l'un de l'autre : dans la face du disque qui est en regard de la base du boîtier 1, le premier passage traversant d'eau froide 2B débouche en arc de circonférence de rayon approximativement égal à celui des passages d'eau chaude 2A, 2C, tandis que dans la face opposée accolée au disque supérieur 3, le deuxième passage traversant d'eau froide 2D débouche en arc de circonférence de plus petit rayon de manière que, dans cette face opposée, la paroi extérieure de l'orifice du deuxième passage d'eau froide 2D soit plus proche de l'axe A que la paroi intérieure des orifices des deux passages d'eau chaude 2A, 2C ; en revanche, le premier passage d'eau froide 2B s'évase en direction de ladite face opposée de telle manière que dans celle-ci les deux orifices des passages d'eau froide 2B, 2D soient à la même distance de l'axe A. Les quatre passages 2A, 2B, 2C, 2D s'étendent chacun sur un peu moins d'un quart de circonférence. Un joint d'étanchéité est inséré dans des gorges creusées en vis-à-vis dans le boîtier 1 et le disque 2.

Le disque supérieur 3 comporte également un trou central le traversant d'une face à l'autre et de plus un passage traversant d'eau chaude 3A et un passage traversant d'eau froide 3B s'étendant en arcs de circonférences de part et d'autre du trou central ; dans la face du disque supérieur 3 qui est accolée à une face du disque inférieur 2, le passage d'eau chaude 3A et le passage d'eau froide 38 débouchent par des orifices de mêmes rayons respectivement que les orifices en vis-à-vis des passages d'eau chaude 2A, 2C et du deuxième passage d'eau froide 2D du disque inférieur. Les deux passages 3A, 3B du disque supérieur 3 s'étendent chacun sur un peu moins d'une demi-circonférence ; ils présentent une partie élargie, ici par un profil en gradin, du coté de la face du disque supérieur qui est accolée à la bride de la manette de commande de débit 4, de manière à déboucher dans cette face par un orifice plus large que dans la face accolée au disque inférieur.

La partie inférieure 4A de la manette de commande de débit 4 liée en rotation au disque supérieur 3 comporte comme on l'a vu un manchon enfilé dans la partie supérieure du trou central traversant du disque supérieur 3 ; ce manchon est en appui contre un épaulement de ce trou central ; un joint d'étanchéité est inséré dans des gorges creusées en vis-à-vis dans les faces accolées du disque supérieur 3 et de la manette ; comme on l'a vu, la partie inférieure 4A de la manette comporte une bride dont la base est enfilée dans la partie supérieure du boîtier 1 ; la bride, à l'opposé de sa base, est en saillie hors du boîtier 1 ; autour de la région en saillie de la bride, est emboîté un bouchon 8 pour le boîtier, auquel la bride et ainsi la manette sont liées axialement. A l'intérieur de la bride, une chambre d'eau chaude 4C et une chambre d'eau froide 4D en communication respectivement avec les passages d'eau chaude 3A et d'eau froide 3B du disque supérieur 3, s'étendent en arcs de circonférences sur la même longueur et la même largeur que ceux-ci. Comme on l'a vu, la manette 4 est destinée à être solidarisée à un organe de commande de débit d'un robinet mélangeur, et à cette fin une région extérieure de sa partie supérieure 4B est cannelée ou rainurée longitudinalement.

Le tiroir de régulation 6 est comme on l'a vu monté coulissant à l'intérieur d'une chambre du canal central de la base du boîtier 1, dans laquelle il est guidé par la surface intérieure latérale de celle-ci avec interposition d'un joint d'étanchéité torique ; Il est adapté pour pouvoir venir en appui sélectivement par l'une de ses faces contre le siège 1 F constitué par un chant d'extrémité d'une cloison interne annulaire de la base du boîtier, ou par sa face opposée contre le siège 2F constitué par le fond annulaire de l'évidemment 2E du disque inférieur 2 ; il comporte intérieurement une chambre annulaire 6A, débouchant dans sa face qui est en vis-à-vis du siège 1 F, dans laquelle est logé un ressort de rappel 9 ; il comporte également des trous de passage d'eau froide 6B pour permettre le passage de l'eau froide longitudinalement à travers le tiroir, débouchant d'un coté dans la face du tiroir tournée vers le siège 2F du disque inférieur 2 et du coté opposé dans la chambre 6A.

Une vis de réglage de température 10 est logée à l'intérieur de la manette de commande de débit 4, à laquelle elle est liée en rotation ; cette vis de réglage 10 est liée par un filetage à la manette de commande de température 7 de manière à constituer un système de transmission de mouvement du type vis-écrou ; elle comporte une chambre intérieure où sont logés un appui de surcourse 11 en forme de disque pour une partie normalement fixe 5B de l'élément thermostatique 5 (c'est-à-dire fixe en l'absence de surcourse de l'éiément 5 due à une température très élevée), un ressort de surcourse 12, et une rondelle d'arrêt 13 par exemple fendue et élastique dont une partie de pourtour est logée dans une gorge annulaire de la surface intérieure de la chambre, à proximité de l'extrémité de celle-ci qui est ouverte vers le tiroir 6 ; la partie normalement fixe 5B de l'élément thermostatique (ici, la partie intérieure de l'élément 5) est appliquée contre le fond d'un trou borgne creusé dans l'appui de surcourse 11, et, en l'absence de surcourse, le ressort de surcourse 12 applique l'appui de surcourse contre la rondelle d'arrêt 13.

La base de la manette de commande de température 7, logée et immobilisée axialement au moyen d'une rondelle fendue dans la partie supérieure de la manette de commande de débit 4, est libre en rotation dans celle-ci et l'étanchéité entre les deux manettes est assurée par un joint torique.

Un organe annulaire de création de turbulences 14, dit « turbulateur », inséré dans le conduit central de sortie d'eau mélangée 1D autour de la région thermosensible de la partie mobile 5A de l'élément thermosensible 5, a une surface intérieure de forme irrégulière en vis-à-vis et à distance de cette région pour assurer l'homogénéité en température de l'écoulement de sortie de la cartouche entre le turbulateur 14 et l'élément 5, et favoriser l'échange thermique entre l'eau mélangée et la région thermosensible de l'élément thermostatique ; cet organe annulaire 14 est maintenu en appui contre un épaulement du conduit 1D au moyen du ressort de rappel 9.

Le bouchon 8 assure la cohésion de toutes ces pièces de la cartouche et notamment permet de plaquer la base du boîtier 1 et les disques 2, 3 l'un contre l'autre au moyen de la manette 4 de commande de débit autour de laquelle il est emboîté avec interposition d'un joint torique.

Le fonctionnement de la cartouche est le suivant :

L'eau chaude entre dans la cartouche par le conduit 1A du boîtier 1, monte par le premier passage d'eau chaude 2A du disque inférieur 2, circule dans le passage d'eau chaude 3A du disque supérieur 3 et dans la chambre d'eau chaude 4C de la manette de commande de débit 4, descend par le deuxième passage d'eau chaude 2C du disque inférieur puis par le conduit de retour d'eau chaude 1C du boîtier, se répand dans la gorge annulaire 1E du boîtier et au-dessus dé celle-ci autour de la partie inférieure du tiroir de régulation 6, et parvient à la base de la chambré 6A du tiroir si celui-ci n'est pas en appui sur son siège inférieur 1F. Simultanément, l'eau froide entre dans la cartouche par le conduit 1B du boîtier 1, monte par le premier passage d'eau chaude 2B du disque inférieur 2, circule dans le passage d'eau froide 3B du disque supérieur 3 et dans la chambre d'eau froide 4D de la manette de commande de débit 4, descend par le deuxième passage d'eau froide 2D du disque inférieur, se répand dans l'évidemment annulaire 2E du disque inférieur 2 et au dessous de celui-ci autour de la partie supérieure du tiroir de régulation 6, et parvient dans le fond de la chambre 6A du tiroir en passant entre celui-ci et son siège supérieur 2F et par les trous de passage 6B si le tiroir n'est pas en appui sur ce siège.

A la base du tiroir 6, l'eau chaude et l'eau froide commencent à se mélanger, et le mélange se poursuit autour de l'élément thermostatique 5 et notamment de sa région thermosensible et à l'intérieur du turbulateur 14 inséré dans le conduit de sortie d'eau mélangée 1D par lequel l'eau mélangée est évacuée.

Le réglage du débit est obtenu par une rotation de la manette de commande de débit 4, provoquant une rotation du disque supérieur 3 définissant la position angulaire de ce disque par rapport au disque inférieur 2, et ainsi la section d'écoulement pour l'eau chaude résultant de la superposition plus ou moins étendue du passage 3A du disque supérieur et du deuxième passage 2C du disque inférieur, et la section d'écoulement pour l'eau froide résultant de la superposition plus ou moins étendue du passage 3B du disque supérieur et du deuxième passage 2D du disque inférieur. Les formes des passages sont adaptées pour que les sections d'écoulement d'eau chaude et d'eau froide soient égales quelle que soit la position angulaire relative entre les deux disques. Les sections d'écoulement varient de la fermeture totale à une ouverture maximale, et inversement.

Quand la température de l'eau mélangée augmente, l'élément thermostatique 5 s'allonge, le tiroir de régulation 6 qui est lié à lui réduit l'espace qui le sépare de son siège 1F dans la base du boîtier 1 et augmente celui qui le sépare de son siège 2F dans le disque inférieur 2, ce qui diminue la section d'écoulement de l'eau chaude et augmente la section d'écoulement de l'eau froide ; il en résulte une diminution de la température de l'eau mélangée ; le fonctionnement est inverse quand la température de l'eau mélangée diminue. Les corrections de la température de l'eau mélangée par l'élément thermostatique s'équilibrent jusqu'à la stabilisation de cette température à une valeur qui dépend de l'altitude à laquelle culmine le piston (partie normalement fixe) de l'élément thermostatique 5.

Le réglage de la température est obtenu par la rotation de la manette de commande de température 7 qui, par le système vis-écrou, imprime un mouvement de translation à la vis de réglage de température 10 qui entraîne l'appui de surcourse 11 (tant que le tiroir de régulation 6 n'est pas en appui contre le disque supérieur 3) contre lequel le piston de l'élément thermostatique 5 est en appui. Un dispositif de butée interne à la cartouche (butée de la vis de réglage de température 10 sur la manette de commande de température 7) ou externe (volant adapté sur la manette 7) limite la température de réglage à une valeur appropriée (par exemple 50°C ou 55°C maximum au point de « puisage »). En outre, s'il survient une coupure d'eau froide, l'élément thermostatique 5 est sensibilisé uniquement par l'eau chaude, le piston s'étend de manière importante, le tiroir de régulation 6 à qui il est lié se déplace jusqu'à arriver en contact contre son siège 1F dans le boîtier 1, et l'appui de surcourse 11 s'éloigne de la rondelle d'arrêt 13 en comprimant le ressort de sourcourse 12 ; il en résulte une fermeture automatique de l'eau chaude, évitant ainsi tout risque de brûlure, ce qui confère à la cartouche une fonction de sécurité anti-brûlure.

Bien entendu, l'invention n'est pas limitée à la forme de réalisation ci-dessus décrite et représentée, et on pourra en prévoir d'autres sans sortir de son cadre.

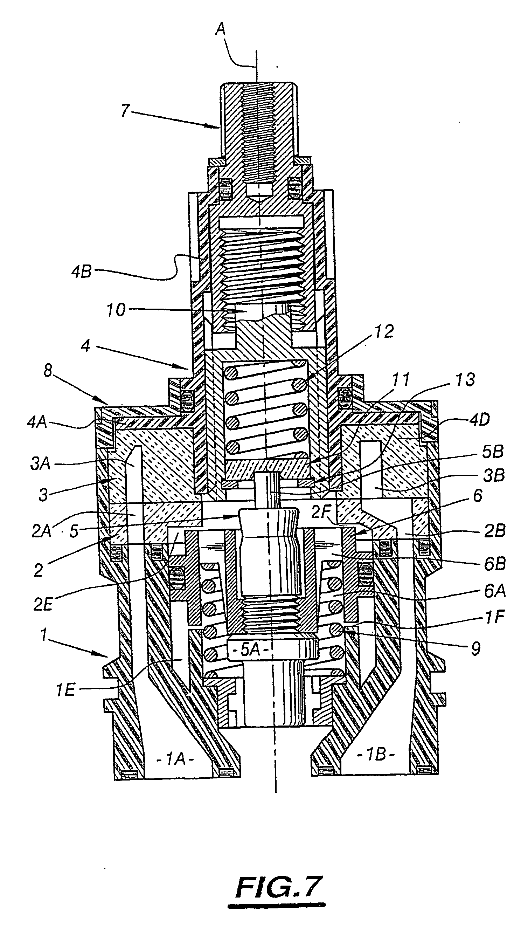

Par exemple, la variante de réalisation de la figure 7 présente un grand nombre de points communs avec la forme de réalisation dont l'agencement et le fonctionnement viennent d'être décrits. Ainsi, sur cette figure, les éléments identiques ou très similaires à des éléments de la forme de réalisation des figures précédentes ont été repérés par les mêmes références numériques, et les éléments identiques ne seront pas à nouveau décrits.

La cartouche de la figure 7 comporte un disque supérieur 3 dont le passage d'eau chaude 3A et le passage d'eau froide 3B ne sont pas traversants de l'une de ses faces à l'autre, et une manette de commande de débit 4 dont la bride de la partie inférieure 4A ne comporte pas, contrairement au cas précédent, de chambre d'eau chaude ni de chambre d'eau froide et peut ainsi se réduire elle-même à un simple disque accolé à la face supérieure du disque supérieur 3. Le fonctionnement est identique à celui de la première forme de réalisation, à cela près que l'eau chaude et l'eau froide circulent seulement dans les passages 3A, 3B du disque supérieur 3 avant de descendre à travers le disque inférieur 2. Il en résulte une fabrication des pièces et un montage plus simples que pour la première forme de réalisation.

## Revendications

1. Cartouche thermostatique à disques en céramique pour robinet de fluide, du type quart de tour à commandes concentriques, comportant un tiroir de régulation (6) solidarisé à une partie mobile (5A) d'un élément thermostatique (5), et un premier et un deuxième disques de réglage de débit (2,3) accolés par l'une de leurs faces, **caractérisée en ce que** le premier disque (2) comporte deux passages internes traversants de fluide chaud (2A, 2C) s'étendant approximativement en arcs de circonférences de rayons approximativement égaux, séparés et approximativement bout à bout, deux passages internes traversants de fluide froid (2B, 2D) s'étendant approximativement en arcs de circonférences de rayons approximativement égaux, séparés et approximativement bout à bout, et un évidement interne (2E) débouchant dans la face du disque qui n'est pas accolée au deuxième disque et dont le fond constitue un siège (2F) pour le tiroir (6) et est en communication avec l'un des passages de fluide froid, et le deuxième disque (3) comporte deux passages internes respectivement de fluide chaud et de fluide froid (3A, 3B) s'étendant approximativement en arcs de circonférences et est mobile en rotation par rapport au premier disque depuis une position d'ouverture où le passage de fluide chaud (3A) du deuxième disque relie les passages de fluide chaud (2A, 2C) du premier disque, et le passage de fluide froid (3B) du deuxième disque relie les passages de fluide froid (2B, 2C) du premier disque, à une position de fermeture où le passage de fluide chaud du deuxième disque est isolé d'au moins l'un des passages de fluide chaud du premier disque et le passage de fluide froid du deuxième disque est isolé d'au moins l'un des passages de fluide froid du premier disque, et inversement.

2. Cartouche thermostatique selon la revendication 1, **caractérisée en ce que** les passages respectivement de fluide chaud et de fluide froid (3A, 3B) du deuxième disque (3) sont des passages traversants, et elle comporte une manette de commande de débit (4) munie de deux chambres respectivement de fluide chaud et de fluide froid (4C, 4D) en regard respectivement des passages de fluide chaud et de fluide froid (3A, 3B) du deuxième disque.

3. Cartouche thermostatique selon la revendication 1, **caractérisée en ce que** les passages respectivement de fluide chaud et de fluide froid (3A, 3B) du deuxième disque (3) ne traversent pas ce disque d'une face à l'autre.

4. Cartouche thermostatique selon l'une quelconque des revendications 1 à 3, **caractérisée en ce qu'**elle comporte un espace annulaire pour le fluide chaud s'étendant autour du tiroir (6) et défini par des surfaces extérieures de celui-ci et des surfaces intérieures d'un organe comportant un siège (1F) pour celui-ci et/ou d'un boîtier (1) dans lequel sont logés le tiroir (6) et les disques (2, 3).

5. Cartouche thermostatique selon l'une quelconque des revendications 1 à 4, **caractérisée en ce qu'**elle comporte un espace annulaire pour le fluide froid s'étendant autour du tiroir (6) et défini par des surfaces extérieures de celui-ci et des surfaces intérieures d'un organe (2) comportant un siège (2F) pour celui-ci.

6. Cartouche thermostatique selon l'une quelconque des revendications 1 à 5, **caractérisée en ce qu'**elle comporte un boîtier (1) présentant en une seule pièce un conduit d'entrée de fluide chaud (1A) et un conduit d'entrée de fluide froid (1B) communiquant respectivement avec un passage de fluide chaud (2A) et un passage de fluide froid (2B) du premier disque (2) lequel est lié en rotation audit boîtier, un conduit de retour de fluide chaud (1C) dans lequel débouche un passage de retour de fluide chaud (2C) du premier disque (2), une surface formant siège (1F) pour le tiroir (6) et délimitant avec celui-ci un passage pour le fluide chaud provenant du premier disque par le conduit de retour de fluide chaud (1C) pour le canaliser vers l'intérieur du tiroir, et une surface intérieure de guidage du tiroir, et le boîtier (1) contient notamment les deux disques (2, 3) ainsi que le tiroir de régulation (6) et l'élément thermostatique (5), maintenus par un bouchon (8) de boîtier.

7. Cartouche thermostatique selon l'une quelconque des revendications 1 à 6, **caractérisée en ce qu'**elle comporte un organe de création de turbulences (14) présentant une surface intérieure de forme irrégulière en vis-à-vis d'une région thermosensible de l'élément thermostatique (5).

8. Robinet mélangeur muni d'une cartouche selon l'une quelconque des revendications 1 à 7, **caractérisé en ce qu'**il comporte un organe de commande de débit solidarisé à une manette de commande de débit (4) de la cartouche, et un organe de commande de température solidarisé à une manette de commande de température (7) de la cartouche.

## Patentansprüche

1. Thermostatische Kartusche mit Keramikscheiben für einen Flüssigkeitshahn vom Viertelumdrehungstyp mit konzentrischen Steuerungen, welche einen mit einem beweglichen Teil (5A) eines thermostatischen Elements (5) fest verbundenen Regulierungsschieber (6) und eine erste und eine zweite Scheibe zur Regulierung des Durchflusses (2, 3), welche mit der einen ihrer Seiten zusammengefügt sind, aufweist, **dadurch gekennzeichnet, dass** die erste Scheibe (2) zwei durchsetzende innere Durchlässe für heiße Flüssigkeit (2A, 2C), welche sich ungefähr in Umfangsbögen mit ungefähr gleichen Radien, getrennt und ungefähr Ende zu Ende erstrecken, zwei durchsetzende innere Durchlässe für kalte Flüssigkeit (2B, 2D), die sich ungefähr in Umfangsbögen mit ungefähr gleichen Radien, getrennt und ungefähr Ende zu Ende erstrecken, und eine innere Ausnehmung (2E), die in der Seite der Scheibe, die nicht an die zweite Scheibe angefügt ist, mündet und deren Boden einen Sitz (2F) für den Schieber (6) bildet und mit dem einen der Durchlässe für kalte Flüssigkeit in Verbindung steht, aufweist, und die zweite Scheibe (3) zwei innere Durchlässe für heiße Flüssigkeit bzw. kalte Flüssigkeit (3A, 3B), die sich ungefähr in Umfangsbögen erstrecken, aufweist und in Bezug auf die erste Scheibe aus einer Öffnungsposition, in der der Durchlass für heiße Flüssigkeit (3A) der zweiten Scheibe die Durchlässe für heiße Flüssigkeit (2A, 2C) der ersten Scheibe miteinander verbindet und der Durchlass für kalte Flüssigkeit (3B) der zweiten Scheibe die Durchlässe für kalte Flüssigkeit (2B, 2C) der ersten Scheibe miteinander verbindet, in eine Schließposition drehbeweglich ist, in der der Durchlass für heiße Flüssigkeit der zweiten Scheibe wenigstens von einem der Durchlässe für heiße Flüssigkeit der ersten Scheibe getrennt ist und der Durchlass für kalte Flüssigkeit der zweiten Scheibe von wenigstens einem der Durchlässe für kalte Flüssigkeit der ersten Scheibe getrennt ist, und umgekehrt.

2. Thermostatische Kartusche nach Anspruch 1, **dadurch gekennzeichnet, dass** die Durchlässe für heiße Flüssigkeit bzw. kalte Flüssigkeit (3A, 3B) der zweiten Scheibe (3) durchsetzende Durchlässe sind, und sie eine Handhabe zur Steuerung des Durchsatzes (4) aufweist, der mit zwei Kammern für heiße Flüssigkeit bzw. kalte Flüssigkeit (4C, 4D) den Durchlässen für heiße Flüssigkeit bzw. kalte Flüssigkeit (3A, 3B) der zweiten Scheibe gegenüberstehend versehen ist.

3. Thermostatische Kartusche nach Anspruch 1, **dadurch gekennzeichnet, dass** die Durchlässe für heiße Flüssigkeit bzw. kalte Flüssigkeit (3A, 3B) der zweiten Scheibe (3) diese Scheibe nicht von einer Seite zur anderen durchsetzen.

4. Thermostatische Kartusche nach einem der Ansprüche 1 bis 3, **dadurch gekennzeichnet, dass** sie einen Ringraum für die heiße Flüssigkeit aufweist, der sich um den Schieber (6) herum erstreckt und durch Außenflächen desselben und Innenflächen eines einen Sitz (1F) für diesen aufweisenden Organs und/oder eines Gehäuses (1), in welchem der Schieber (6) und die Scheiben (2, 3) aufgenommen sind, definiert ist.

5. Thermostatische Kartusche nach einem der Ansprüche 1 bis 4, **dadurch gekennzeichnet, dass** sie einen Ringraum für die kalte Flüssigkeit aufweist, der sich um den Schieber (6) herum erstreckt und durch Außenflächen desselben und Innenflächen eines einen Sitz (2F) für diesen aufweisenden Organs (2) definiert ist.

6. Thermostatische Kartusche nach irgendeinem der Ansprüche 1 bis 5, **dadurch gekennzeichnet, dass** sie ein Gehäuse (1) aufweist, welches in einem Stück eine Eintrittsleitung für heiße Flüssigkeit (1A) und eine Eintrittsleitung für kalte Flüssigkeit (1B), die jeweils mit einem Durchlass für heiße Flüssigkeit (2A) und einem Durchlass für kalte Flüssigkeit (2B) der ersten Scheibe (2), die mit dem Gehäuse drehfest verbunden ist, in Verbindung stehen, eine Rückleitung für heiße Flüssigkeit (1C), in welche ein Rückdurchgang für heiße Flüssigkeit (2C) der ersten Scheibe (2) mündet, eine einen Sitz (1F) für den Schieber (6) bildende und mit diesem einen Durchlass für die von der ersten Scheibe durch die Rückleitung für heiße Flüssigkeit (1C) herkommende heiße Flüssigkeit bestimmende Fläche, um sie ins Innere des Schiebers zu leiten, und eine innere Führungsfläche für den Schieber aufweist, und das Gehäuse (1) insbesondere die beiden Scheiben (2, 3) sowie den RegulierungsSchieber (6) und das thermostatische Element (5), gehalten von einer Gehäusekappe (8), enthält.

7. Thermostatische Kartusche nach einem der Ansprüche 1 bis 6, **dadurch gekennzeichnet, dass** sie ein Wirbelerzeugungsorgan (14) aufweist, weiches eine Innenfläche unregelmäßiger Form gegenüber einem wärmeempfindlichen Bereich des thermostatischen Elements (5) darbietet.

8. Mischhahn versehen mit einer Kartusche nach einem der Ansprüche 1 bis 7, **dadurch gekennzeichnet, dass** er ein Organ zur Durchsatzsteuerung, welches mit einer Durchsatzsteuerungshandhabe (4) der Kartusche fest verbunden ist, und ein Organ zur Temperatursteuerung, welches mit einer Temperatursteuerungshandhabe (7) der Kartusche fest verbunden ist, aufweist.

## Claims

1. Thermostatic cartridge with ceramic discs for fluid tap, of the concentric controls quarter-turn type, comprising a regulating slide valve (6) integral with a moveable part (5A) of a thermostatic element (5) and a first and a second disc for adjusting flow rate (2, 3) which are adjoined via one of their faces, **characterized in that** the first disc (2) comprises two internal through-passages for hot fluid (2A, 2C) extending approximately along circumferential arcs of approximately equal radii, separated and approximately abutting, two internal through-passages for cold fluid (2B, 2D) extending approximately along circumferential arcs of approximately equal radii, separated and approximately abutting, and an internal cavity (2E) emerging into that face of the disc not adjoining the second disc and whose bottom constitutes a seat (2F) for the slide valve (6) and is in communication with one of the cold fluid passages, and the second disc (3) comprises two internal passages respectively for hot fluid and for cold fluid (3A, 3B) extending approximately along circumferential arcs and is moveable in rotation with respect to the first disc from an open position where the hot fluid passage (3A) of the second disc links the hot fluid passages (2A, 2C) of the first disc, and the cold fluid passage (3B) of the second disc links the cold fluid passages (2B, 2C) of the first disc, to a closed position where the hot fluid passage of the second disc is isolated from at least one of the hot fluid passages of the first disc and the cold fluid passage of the second disc is isolated from at least one of the cold fluid passages of the first disc, and vice versa.

2. Thermostatic cartridge according to Claim 1, **characterized in that** the respectively hot fluid and cold fluid passages (3A, 3B) of the second disc (3) are through-passages, and it comprises a flow rate control handle (4) furnished with two respectively hot fluid and cold fluid chambers (4C, 4D) opposite respectively the hot fluid and cold fluid passages (3A, 3B) of the second disc.

3. Thermostatic cartridge according to Claim 1, **characterized in that** the respectively hot fluid and cold fluid passages (3A, 3B) of the second disc (3) do not traverse this disc from one face to the other.

4. Thermostatic cartridge according to any one of Claims 1 to 3, **characterized in that** it comprises an annular space for the hot fluid extending around the slide valve (6) and defined by exterior surfaces of the latter and interior surfaces of a member comprising a seat (1F) for the latter and/or of a casing (1) in which the slide valve (6) and the discs (2, 3) are housed.

5. Thermostatic cartridge according to any one of Claims 1 to 4, **characterized in that** it comprises an annular space for the cold fluid extending around the slide valve (6) and defined by exterior surfaces of the latter and interior surfaces of a member (2) comprising a seat (2F) for the latter.

6. Thermostatic cartridge according to any one of Claims 1 to 5, **characterized in that** it comprises a casing (1) exhibiting as a single component a hot fluid inlet conduit (1A) and a cold fluid inlet conduit (1B) communicating respectively with a hot fluid passage (2A) and a cold fluid passage (2B) of the first disc (2) which is tied in rotation to the said casing, a hot fluid return conduit (1C) into which a hot fluid return passage (2C) of the first disc (2) emerges, a seat-forming surface (1F) for the slide valve (6) and delimiting with the latter a passage for the hot fluid coming from the first disc via the hot fluid return conduit (1C) so as to channel it to the interior of the slide valve, and an interior surface for guidance of the slide valve, and the casing (1) contains in particular the two discs (2, 3) as well as the regulating slide valve (6) and the thermostatic element (5), these being retained by a casing plug (8).

7. Thermostatic cartridge according to any one of Claims 1 to 6, **characterized in that** it comprises a turbulence creation member (14) exhibiting an interior surface of irregular shape in relation to a thermosensitive region of the thermostatic element (5).

8. Mixer tap furnished with a cartridge according to any one of Claims 1 to 7, **characterized in that** it comprises a flow rate control member integral with a handle for control of flow rate (4) of the cartridge, and a temperature control member integral with a handle for control of temperature (7) of the cartridge.
